# EUROPÄISCHE PATENTSCHRIFT

(11) **EP 1 912 843 B1**
(45) Veröffentlichungstag und Bekanntmachung des Hinweises auf die Patenterteilung: **12.05.2010**
(21) Anmeldenummer: 06762904.8
(22) Anmeldetag: 29.07.2006
(51) Int. Cl.: B60W 30/14

(54) **FAHRERASSISTENZSYSTEM FÜR EIN KRAFTFAHRZEUG**
DRIVER ASSISTANCE SYSTEM FOR A MOTOR VEHICLE
SYSTEME D'ASSISTANCE AU CONDUCTEUR D'UN VEHICULE AUTOMOBILE

(30) Priorität: 05.08.2005 DE 102005036924
(43) Veröffentlichungstag der Anmeldung: 23.04.2008
(73) Patentinhaber: Bayerische Motoren Werke Aktiengesellschaft, 80809 München (DE)
(72) Erfinder: NAAB, Karl, 85457 Wörth (DE); MAYSER, Christoph, 82008 Unterhaching (DE)
(86) Internationale Anmeldenummer: PCT/EP2006/007532
(87) Internationale Veröffentlichungsnummer: WO 2007/017149

(56) Entgegenhaltungen:
- DE-A1- 19 654 769
- DE-C1- 4 443 219
- US-A1- 2004 040 765

## Beschreibung

Die Erfindung betrifft ein Fahrerassistenzsystem für ein Kraftfahrzeug, das einen Regler zur Regelung der Beschleunigung des Kraftfahrzeugs gemäß einer Sollbeschleunigung aufweist, nach dem Oberbegriff des Patentanspruchs 1, und wie es durch das Dokument US 2004/040765 A1 gezeigt wird.

Ein derartiges Fahrerassistenzsystem ist beispielsweise auch aus der DE 196 54 769 A1 bekannt Als Einkoppelglied zur Einkoppelung einer vom Fahrer des Fahrzeuges vorgebbaren Zusatzbeschleunigung ist beispielsweise das Fahrpedal bekannt Zum weiteren technischen Hintergrund wird beispielsweise noch auf das Dokument DE 44 43 219 C1 hingewiesen.

Allgemein sind Fahrerassistenzsysteme zur Längsführung in unterschiedlicher Wirkungstiefe realisierbar. So zeigen z.B. informierende und/oder warnende Abstands-Informationssysteme dem Fahrer zu kurze Folgeabstände auf akustischem, optischem oder haptischem Wege an. Der Fahrer kann dann entscheiden, ob und wie er situationsangepasst eine Korrektur seiner Fahrgeschwindigkeit und des momentanen Abstands veranlasst. Semi-automatische empfehlende Assistenzsysteme verwenden z.B. ein sogenanntes aktives Gaspedal, das den Fahrer direkt über künstliche Zusatzkräfte im Gaspedal über die momentan "richtige" Gaspedalstellung informiert, die zur Einhaltung einer angepassten Geschwindigkeit oder des richtigen Folgeabstands notwendig ist. Der Fahrer entscheidet selber, in welcher Weise er die vom System vorgeschlagene direkte Stellgrößeninformation umsetzt. Automatische regelnde Abstandsregelsysteme, wie ACC, versuchen, die Längsführung für bestimme Fahrsituationen vollständig zu übernehmen.

Die Fahrgeschwindigkeitsregelung oder das ACC-System ermöglichen es in der Regel, dass der Fahrer die Wunschgeschwindigkeit mit einem Bedienelement, zum Beispiel ein Lenkstockhebel oder Tasten, am Lenkrad setzt und das System dann die Geschwindigkeit gegebenenfalls in Abhängigkeit des zeitlichen Abstands zum Vorausfahrenden regelt. Der Fahrer kann die Wunschgeschwindigkeit mit dem Lenkstockhebel bzw. den Tasten verändern oder das System mit diesen Bedienelementen deaktivieren. Weiter ist es dem Fahrer in der Regel möglich, das System mit dem Gaspedal zu übersteuern (gleich höhere Geschwindigkeit), wodurch die Regelung zeitweise außer Kraft gesetzt wird, und das System mit dem Bremspedal zu deaktivieren. Gemäß dieser bisher bekannten Systemphilosophie kann der Fahrer entweder dem System vertrauen und das System fahren lassen, wobei gewisse Vorgaben gemacht werden können, wie oben beschrieben, oder das System abschalten und selbst fahren. Lässt der Fahrer das System fahren, so wird er zum Beobachter/Überwacher des Systems, der das System indirekt beeinflussen kann, ist aber nicht aktiv am Regelungsprozess (Geschwindigkeit und Abstand einhalten) beteiligt. Erreicht das System eine seiner Grenzen, erfordert der Schritt, die aktive Kontrolle wieder selbst zu übernehmen, einen Rollenwechsel. Dieser Rollenwechsel fällt vielen Fahrern schwer und wird daher solange wie möglich herausgezögert.

Nach dem derzeitigen und in absehbarer Zukunft zu erwartenden Stand der Technik ist es nicht möglich, dem Fahrerassistenzsystem die gesamte Längsführung zu übertragen. Es bleiben eine Vielzahl von Fahrsituationen übrig, die das automatische Abstandsregelsystem im realistischen Fahrbetrieb nicht oder nur unzureichend bewältigen kann. Wesentliche Faktoren sind einerseits die eingeschränkte Erkennungsleistung heute üblicher Fahrumgebungssensoriken, andererseits ist der entscheidende Faktor jedoch generischer Natur: Aus der Sicht der gesamten Fahraufgabe erfolgt durch ACC eine teilweise Vollautomatisierung von einzelnen Aufgaben innerhalb der gesamten Längsführungsaufgabe, die mit den verbleibenden Bedien- und Regelungstätigkeiten des Fahrers in erheblichem Maße interferiert. Der Fahrer hat mit dem automatischen System zu interagieren. Dieses ist im Falle des ACC im Wesentlichen nur auf Abstandshaltung oder bei freier Fahrt auf Einhaltung einer Wunschgeschwindigkeit programmiert. Autofahren ist hingegen ein dynamischer Prozess, bei dem in der Regel nicht ausschließlich konstante Zeitlücken oder fixe Wunschgeschwindigkeiten einzuhalten sind, sondern es treten in einer signifikanten Häufigkeit Abweichungen von diesen einfachen Regeln des Systems ACC auf. Dadurch sind zahlreiche Konflikte mit den Fahrererwartungen oder einem fahrertypischen Verhalten vorprogrammiert.

Beispiele hierfür sind Einscherer, abbiegende Fahrzeuge, zu kurze Sensor-Reichweiten, späte Reaktion bei schneller Annährung, ungenaue/unsichere Spurzuordnung, Spurwechsel, begrenzte Verzögerungsleistungen, keine Reaktion auf stillstehende Objekte, Fehlinterpretationen angeblich relevanter Objekte, Nicht-Detektion von relevanten Objekten usw..

Wie zuvor dargelegt, kann der Fahrer in diesen Fällen bei heutigen Funktions und Bedienauslegungen beim ACC das System entweder abschalten oder selbst die Kontrolle übernehmen, indem er den AUS-Knopf betätigt, oder wenn eine andere als vom System eingeleitete Verzögerung notwendig wird, es zusammen mit der Betätigung des Bremspedals abschaltet. Um eine höhere als die vom System vorgegebene Beschleunigung zu erzeugen, muss der Fahrer das Gaspedal betätigen. Die Systemfunktion geht in diesem Falle kurzzeitig in den Hintergrund und wird bei Loslassen des Gaspedals wieder aktiv. In beiden Fällen wird mit dem Abschalten ein Bruch im natürlichen dynamischen Fahrfluss erzeugt. Ein Wiedereinschalten, das oft kurz nach dem Abschaltvorgang erfolgt, bewirkt in der Regel einen deutlich wahrnehmbaren Einschwingvorgang. Weiter ist der Eingriff auch in beiden Fällen mit erheblichem motorischem Bedienaufwand verbunden.

Um eine bessere Akzeptanz und ein harmonischeres Zusammenspiel des Fahrers mit dem Teil-Automatisierungssystem zu erreichen, empfiehlt es sich daher, Maßnahmen vorzusehen, die eine bessere Einbindung des Fahrers ermöglichen, um einerseits seine abweichende Einschätzung der Fahrsituation, insbesondere aber seine Absicht, dem System besser mitzuteilen, damit der gesamte Fahrprozess homogener abläuft.

Diesbezüglich beschreibt die DE 103 03 611 A1 einen Geschwindigkeitsregler mit mehreren Betriebsmodi, bei dem als ein Betriebsmodus ein "Stopp+Go-Modus" und als ein zweiter Betriebsmodus ein ACC-Modus vorgesehen sind. In diesen beiden Modi ist es möglich, dass der Fahrer das Gaspedal betätigt und so die S+G-Regelfunktion bzw. die ACC-Regelfunktion übersteuert, wobei diese Funktionen während der Übersteuerung ausgesetzt werden und nach der Übersteuerung wieder aufgenommen werden.

Weiter offenbart die DE 10 2004 040 532 A1 ein Fahrzeugobjekterfassungssystem, Nachfolgesteuersystem und Fahrzeugsteuersystem, das einen Beschleunigungs-/Verzögerungswunsch-Detektor zum Erfassen eines Wunschs eines Insassen nach Beschleunigung oder Verzögerung auf der Basis der Betätigung eines Bremspedals durch den Insassen, und/oder der Betätigung eines Gaspedals durch den Insassen und/oder einer Betätigung eines Schalters durch den Insassen und/oder einer Stimme des Insassen aufweist. Auf Grundlage des erfassten Beschleunigungs-/Verzögerungswunsches wird ein Erfassungsbereich des für das ACC-System verwendeten Sensors verändert. Insbesondere wird bei einem Wunsch nach Verzögerung der Erfassungsbereich seitlich vergrößert, wenn ein Wunsch des Insassen nach Verzögerung erfasst wird, damit seitlich vor das zu regelnde Fahrzeug einfahrende Fahrzeuge früher erfasst werden und sich das System automatisch auf diese einstellt. Im Gegensatz dazu wird der Erfassungsbereich seitlich verkleinert, wenn der Beschleunigungs-/Verzögerungs-Detektor einen Wunsch nach Beschleunigung erfasst, damit eine unnötige Ausführung einer Fahrzeugsteuerung aufgrund von seitlich einfahrenden Fahrzeugen verhindert wird.

Die DE 103 43 178 A1 offenbart ein Fahrerassistenzsystem mit variabler Längsführungsstrategie, das ein Strategiemodul zur variablen Bestimmung der anzuwendenden Längsführungsstrategie aufweist. Hier sind unterschiedliche voreingespeicherte oder voreinspeicherbare Längsführungsstrategien, wie z.B. "Komfortbetont", "Normal" oder "Dynamisch", vorhanden, zwischen denen der Fahrer vor Antritt der Fahrt und gegebenenfalls auch während der Fahrt wählen kann. Die Strategien unterscheiden sich grundsätzlich durch unterschiedlich positive/negative Beschleunigungsverhalten.

Die DE 196 40 694 A1 beschreibt ein Verfahren und eine Vorrichtung zur Steuerung der Fahrgeschwindigkeit eines Fahrzeugs, wobei die Begrenzung der Geschwindigkeitsänderung des Fahrzeugs abhängig von dem vom Fahrer gewünschten dynamischen Verhalten des Fahrzeugs, insbesondere abhängig vom Schaltzustand wenigstens eines vom Fahrer betätigbaren Bedienelements, aufgehoben bzw. auf höhere Werte gesetzt wird. Hier wird die Beschleunigungs- bzw. Verzögerungsdynamik eines Fahrgeschwindkeitssteuersystems einstellbar ausgeführt, wobei der Fahrer durch die Einstellung der Beschleunigungs- bzw. Verzögerungsdynamik in das System eingebunden wird. Da hier die Grenzwerte der vom System eingestellten maximalen Beschleunigung bzw. Verzögerung verändert werden, wird eine Wirkung des Eingriffs nur dann deutlich, wenn die automatische Fahrgeschwindigkeitsregelung eine Beschleunigung, BeschJeunigungsänderung, Verzögerung und/oder Verzögerungsänderung vornimmt, die über den alten Grenzwerten liegt.

Aus der DE 100 19 190 A1 ist weiter ein Verfahren zur adaptiven Abstands- und/oder Fahrgeschwindigkeitsregelung bei einem Kraftfahrzeug bekannt, wobei die die Sollbeschleunigung repräsentierende Größe wenigstens in Abhängigkeit von wenigstens einem Basiswert gebildet und/oder begrenzt wird, und externe und interne Beschleunigungsanforderungen durch eine entspreche Vorgabe von Basiswerten umsetzbar sind. Insbesondere soll die Fahrzeugbeschleunigung aus Komfort- und Sicherheitsgründen nicht in belieben Sprüngen verändert werden, sondern der als zeitliche Änderung der Beschleunigung definierte Ruck wird in positiver und negativer Richtung durch Grenzwerte beschränkt. Eine neue Sollbeschfeunigung bestimmt sich dann anhand eines Minimum-Basiswerts, eines Maximum-Basiswerts; der Grenzwerte und der vorherigen Sollbeschleunigung. Der Maximum-Basiswert ist derjenige Wert, den eine vom ACC-Regler vorgegebene Sollbeschleunigung mindestens überschreiten muss, damit eine positive Beschleunigungsänderung des Fahrzeugs auftritt und der Minimum-Basiswert ist derjenige, den eine vom ACC-Regler vorgegebene Sollbeschleunigung mindestens unterschreiben muss, damit eine negative Beschleunigungsänderung des Fahrzeugs auftritt. Bei aktiver Regelung werden der Minimum-Basiswert und der Maximum-Basiswert aus einem aktuellen Basiswert und dem letzten Sollwert gebildet. Bei allen Übergängen in den Antriebsfall oder den Aktiv-Control-Mode werden der Minimum-Basiswert und der Maximum-Basiswert auf den aktuellen Basiswert initialisiert. Bei Regelung mit Bremseingriff werden der Minimum-Basiswert und der Maximum-Basiswert aus von einem Verzögerungsregler bzw. einer aktiven Bremse bereitgestellten Basiswerten und dem letzten Sollwert gebildet, wobei, wenn der Sollwert unterhalb der Minimalbeschleunigung des Antriebs liegt, aber der Bremseingriff noch nicht aktiviert ist, der Maximum-Basiswert durch einen Minimalbeschleunigungswert und der Minimum-Basiswert durch einen um ein einen Bremseinschalthysteresewert verminderten Minimalbeschleunigungswert gebildet werden. Wenn der Fahrer des Kraftfahrzeugs eine größere Motorleistung als das ACC-System anfordert (Fahrerübertreten) werden der Maximum-Basiswert als aktueller Basiswert und der Minimum-Basiswert als ein nicht näher bestimmter Wert a_{DrvMin} gesetzt.

Allen diesen Systemen ist gemeinsam, dass der Fahrer immer vor der Entscheidung steht, ob er das System fahren lassen möchte oder ob er selbst fahren möchte. Ein Eingriff in das System, der dieses nicht zumindest vorübergehend abschaltet, ist nur in indirekter Weise möglich, weswegen kritischen Situationen nicht adäquat durch ein Abbremsen oder Beschleunigen unter Beibehaltung der aktiven Regelung ausgewichen werden kann.

Demgemäß liegt der Erfindung die Aufgabe zugrunde, ein verbessertes Fahrerassistenzsystem für ein Kraftfahrzeug anzugeben, dass einen Regler zur Regelung der Beschleunigung des Kraftfahrzeugs gemäß einer Sollbeschleunigung aufweist.

Erfindungsgemäß wird diese Aufgabe gelöst durch ein Fahrerassistenzsystem für ein Kraftfahrzeug, mit einem Regler zur Regelung der Beschleunigung des Kraftfahrzeugs gemäß einer Sollbeschleunigung, das ein Einkoppelglied zur Einkoppelung einer vom Fahrer des Kraftfahrzeugs vorgebbaren Zusatzbeschleunigung aufweist.

Demzufolge bietet die Erfindung eine sorgfältige Einbettung der Eingriffsmöglichkeiten auf das Fahrerassistenzsystem in die natürlichen und intuitiven Handlungen und Reaktionen des Fahrers. Durch die Verwendung eines Einkoppelglieds zur Einkoppelung einer vom Fahrer des Kraftfahrzeugs vorgebbaren Zusatzbeschleunigung wird es dem Fahrer durch eine überlagerte Regelung ermöglicht, zusätzliche Beschleunigungsanforderungen in das Geschwindigkeitsregelsystem einzuspeisen. Durch das Regelungskonzept werden die Fahreranforderungen und die Systemanforderungen zu einer Gesamt-Beschleunigungsanforderung verarbeitet und eingeregelt. Durch diese Vorgehensweise ändert sich der Betriebsmodus so, dass jetzt der Fahrer gemeinsam mit dem System fährt. Dadurch muss der Fahrer das System nicht so häufig abschalten. Der Fahrer kann das System in bestimmten Situationen übersteuern (durch eine zusätzliche Beschleunigungsanforderung), ohne es abzuschalten. Ist die Fahrsituation bewältigt, zieht sich der Fahrer zurück (beendet seine zusätzliche Anforderung) und das System übernimmt automatisch wieder die komplette Regelung. Der Fahrer ist also aktiv am Regelungsprozess beteiligt und somit "in the Loop".

Erfindungsgemäß wird demzufolge der Automatisierungsgrad, z.B. der ACC-Funktion, derart reduziert, dass der Fahrer die vom ACC-Regler vorgesehene Sollbeschleunigung oder Sollverzögerung (= negative Sollbeschleunigung) des Fahrzeugs über ein geeignetes Interaktionselement so modifizieren kann, dass dadurch sein von ACC-System abweichender Fahrwunsch (Beschleunigungs- oder Fahrgeschwindigkeitswunsch) der gegebenenfalls durch seine vom ACC-System abweichende Einschätzung der Fahrsituation begründet ist, dem im ACC-System vorhandenen Beschleunigungsregler mitteilen kann, ohne dass die ACC-Funktion unterbrochen wird.

Ein derartiges Stellelement für die Überlagerung des Fahrerwunschs mit einer vom Systemwunsch abweichenden Sollbeschleunigung oder Sollverzögerung kann ein manuelles Bedienelement mit einer definierten Nullstellung und kontinuierlich abgreifbaren positiven und negativen Stellbereich sein. Dieses Bedienelement ist vorzugsweise in erreichbarer Griffweite des Fahrers angeordnet, z.B. in der Nähe des Gangwahlhebels, in einem Multifunktions-Lenkrad, in Form eines Lenkstockhebels usw.. Das Bedienelement ist vorzugsweise konstistent zu Fahrererwartungen gewählt, so dass intuitive Fahrerreaktionen für Beschleunigungen und Verzögerungen möglichst ohne reaktive Fehlbedienung ermöglicht werden, beispielsweise bei waagerechter Anordnung des Bedienelements kann folgende Bedieneinrichtung zweckmäßig sein: nach vorne = Systembeschleunigung erhöhen, nach hinten = Systembeschleunigung erniedrigen.

Aufgrund dieser vom Bedienelement durch den Fahrer erzeugten Werte wird die vom System erzeugte Sollbeschleunigung so modifiziert, dass kontinuierlich die Wirkung des Systems abgeschwächt und die Wirkung der Fahrerbedienung verstärkt wird. Die Charakteristiken der Einsteuerung durch das Bedienelement können beliebig linear, progressiv, degressiv, symmetrisch, unsymmetrisch und/oder mit einem eigenen Zeitverhalten gestaltet werden, um den Anforderungen an Dosierbarkeit, Fahrzeugreaktion, Dynamikerlebnis, optimaler Fahrer-Fahrzeug-Regelkreis-Performance usw. zu genügen.

Weiter wird diese Aufgabe erfindungsgemäß durch ein Verfahren zur Regelung der Beschleunigung des Kraftfahrzeugs gemäß einer Sollbeschleunigung mittels eines Reglers gelöst, bei dem eine Einkopplung einer vom Fahrer des Kraftfahrzeugs vorgebbaren manuellen Zusatzbeschleunigung erfolgt.

Die Unteransprüche beinhalten vorteilhafte Weiterbildungen und Ausgestaltungen der Gegenstände der Ansprüche 1 und 6.

Vorzugsweise wird erfindungsgemäß eine Systembeschleunigung mit der Zusatzbeschleunigung überlagert, um die Sollbeschleunigung zu erzeugen. Hierzu umfasst der Regler des erfindungsgemäßen Fahrerassistenzsystems vorzugsweise einen Beschleunigungsregler, der die Sollbeschleunigung empfängt, wobei das Einkoppelglied, das die Sollbeschleunigung durch die Überlagerung der Zusatzbeschleunigung zu der Systembeschleunigung erzeugt, dem Beschleunigungsregler vorgeschaltet ist.

Vorzugsweise wird nach der Erfindung eine Störgrößenkompensation ausgeführt, die auf die Sollbeschleunigung wirkt. Hierzu umfasst der Beschleunigungsregler des erfindungsgemäßen Fahrerassistenzsystems vorzugsweise einen Störgrößenbeobachter, der auf die Sollbeschleunigung wirkt.

Die Systembeschleunigung wird erfindungsgemäß vorzugsweise durch eine Geschwindigkeitsregelung erzeugt. Hierzu umfasst der Regler des erfindungsgemäßen Fahrerassistenzsystems vorzugsweise einen Geschwindigkeitsregler, der die Systembeschleunigung ausgibt, wobei das Einkoppelglied dem Geschwindigkeitsregler nachgeschaltet ist und die Sollbeschleunigung durch Überlagerung der Systembeschleunigung mit der Zusatzbeschleunigung erzeugt.

Die Überlagerung der Systembeschleunigung mit der Zusatzbeschleunigung erfolgt erfindungsgemäß vorzugsweise durch eine Addition der Zusatzbeschleunigung zu der Systembeschleunigung, d.h., in dem erfindungsgemäßen Fahrerassistenzsystem ist das Einkoppelglied vorzugsweise ein Addierer.

Durch diese erfindungsgemäßen Ausgestaltungen wirkt sich die manuelle Überlagerung einer Beschleunigung zur Systembeschleunigung wie eine Störbeschleunigung in geschlossenen Regelkreis aus. Die Einkopplung der manuellen Zusatzbeschleunigung erfolgt nicht innerhalb der Störgrößenbeobachter-Rückführung, um die Wirkung der manuellen Zusatzbeschleunigung nicht durch den Störgrößenbeobachter zu kompensieren. Ebenso besitzen der Geschwindigkeitsregler und ein diesem evtl. vorgeschalteter Abstandsregler vorzugsweise keine auf die jeweilige Regeldifferenz wirkenden Integralanteile, damit hierdurch nicht die Wirkung der manuellen Zusatzbeschleunigung aufgehoben wird.

Mit dieser erfindungsgemäßen Anordnung einer Beschleunigungsbedienung lassen sich beispielsweise Fahrsituationen wie nahe Einscherer ohne Bremsbetätigung und damit ohne Deaktivierung des Assistenzsystems bewältigen.

Weitere Einzelheiten, Vorteile und Merkmale der vorliegenden Erfindung ergeben sich aus nachfolgender Beschreibung von Ausführungsbeispielen anhand der Zeichnungen. Es zeigen:
- Fig. 1: ein Schema der erfindungsgemäßen Interaktion des Fahrers mit dem Fahrzeug und dem Assistenzsystem;
- Fig. 2: die Auswirkung des Fahrerwunschs bei der Beschleunigungsbedienung nach einer ersten vorteilhaften Ausführungsform der Erfindung; und
- Fig. 3: eine mögliche Implementation einer manuellen Beschleunigungsbedienung in eine ACC- und/oder Geschwindigkeitsreglerstruktur nach einer bevorzugten Ausführungsform der Erfindung.

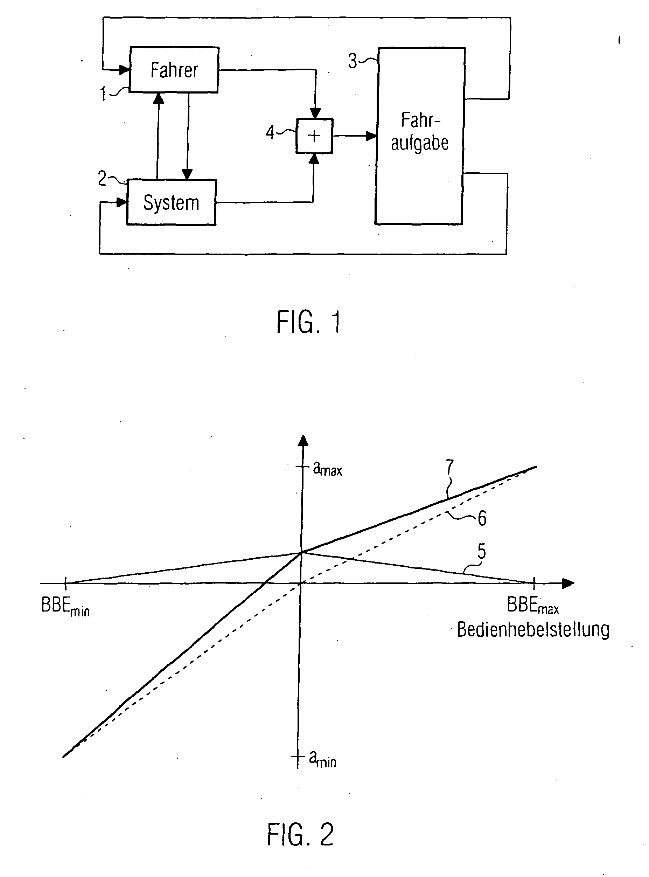

Fig. 1 zeigt ein Schema der Interaktion des Fahrers 1 mit Fahrzeug und' Assistenzsystem 2, z.B. mittels eines Beschleunigungsbedienelements, nach einer bevorzugten Ausführungsform der Erfindung. Es ist insbesondere deutlich zu erkennen, dass der mit dem System 2 interagierende Fahrer 1 gemeinsam und mit dem System 2 gleichberechtigt eine Fahraufgabe 3 löst. Hierzu wird ein von dem System 2 ausgegebenes Steuersignal mit einem vom Fahrer 1 abgegebenen Steuersignal überlagert. Diese Überlagerung erfolgt mittels eines Addierers 4, der ein Gesamtsteuersignal bildet, welches auf die Fahreraufgabe 3 wirkt. Von dieser erfolgt eine jeweilige Rückkopplung an den Fahrer 1 und das System 2.

Das erfindungsgemäße Fahrerassistenzsystem beinhaltet demzufolge nicht eine getrennte Regelung der Fahraufgabe zum einen durch das System 2 und zum anderen durch den Fahrer 1, wobei ein mittels des Systems 2 und ein mittels des Fahrers 1 gebildeter Regelkreis jeweils alternativ auf die Fahraufgabe 3 einwirken, sondern über die Addition der jeweiligen Steuersignale und eine Zuführung der überlagerten Steuersignale an die Fahraufgabe 3 eine gemeinsame Regelung, um die Fahraufgabe 3 zu bewältigen. Erfindungsgemäß wird demzufolge der Fahrer 1 in das Fahrerassistenzsystem 2 eingebunden (oder das Fahrerassistenzsystem 2 in die durch den Fahrer 1 erfolgende Regelung).

Die Fig. 2 stellt ein Beispiel einer Überlagerungscharakteristik dar, wie sie durch die Überlagerung erzeugt werden kann. Hier stellt die Abszisse die Bedienhebelstellung und die Ordinate eine Beschleunigung dar. In diesem Koordinatensystem eingezeichnet sind ein System-Sollbeschleunigungsanteil 5, ein Bedienhebel-Sollbeschleunigungsanteil 6 und eine resultierende Sollbeschleunigung 7. Die momentane vom System vorgegebene Sollbeschleunigung 5 kann hinsichtlich ihrer Maximum- bzw. Minimum-Werte von Situation zu Situation variieren, es ist jedoch klar erkennbar, dass die System-Sollbeschleunigung 5 mit einem Auslenken des Bedienhebels in positive oder negative Richtung linear vermindert wird und bei maximaler Auslenkung des Bedienhebels in positiver oder negativer Richtung auf 0 verringert ist. Der Bedienhebel-Sollbeschleunigungsanteil 6 ist hier als eine durch den Ursprung des Koordinatensystems verlaufende Gerade eingezeichnet, es können jedoch beliebige andere Funktionen gewählt werden, die auch nicht unbedingt durch den Ursprung des Koordinatensystems verlaufen müssen. In letzterem Fall ergibt sich im Nullpunkt des Bedienhebels bereits eine "vom Fahrer vorgegebene" Zusatzbeschteunigung.

Die resultierende Sollbeschleunigung 7 wird durch Addition der System-Sollbeschleunigung 5 und der Bedienhebel-Sollbeschleunigung 6 erhalten.

Die Chrarakteristiken der über den Bedienhebel erfolgenden Einsteuerung können beliebig linear, progressiv, degressiv, symmetrisch, unsymmetrisch und/oder mit eigenem Zeitverhalten gestaltet werden, wodurch unterschiedliche Anforderungen an Dosierbarkeit, Fahrzeugreaktion, Dynamik-Erlebnis, optimaler Fahrer-Fahrzeug-Regelkreis-Performance usw. erfüllt werden. Ebenso kann die System-Sollbeschleunigung 5 mit einer Auslenkung des Bedienhebels nicht linear vermindert und/oder nicht bis auf Null vermindert werden.

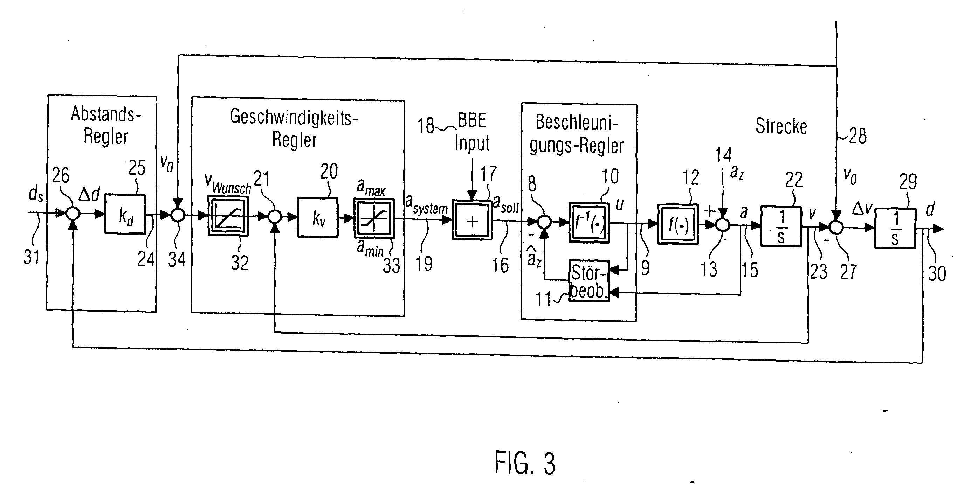

Die Fig. 3 zeigt eine Implementation einer manuellen Beschleunigungsbedienung in eine ACC- und/oder Geschwindigkeitsreglerstruktur gemäß einer bevorzugten Ausführungsform oder Erfindung. Der Kern dieses Reglers ist ein Beschleunigungsregler mit einem Regelelement 10 mit inversem Fahrzeugmodell f⁻¹(·) und einem Störbeobachter 11. Durch diesen Beschleunigungsregler wird eine Stellgröße u an das Fahrzeug abgegeben, d.h., ein Signal zum Gasgeben/Bremsen. Das Fahrzeug selbst ist in der Fig. 3 als "Strecke" durch ein statisches Fahrzeugmodell f(·) 12, einen diesem nachgeschalteten Addierer 13, durch den eine Störbeschleunigung az eingekoppelt wird, einem die von diesem ausgegebene Beschleunigung a des Fahrzeugs empfangenden ersten Differenzierglied 22, das die von dem Fahrzeug gefahrene Geschwindigkeit v ausgibt, einem Subtrahierer, der die Fahrzeuggeschwindigkeit v von einer Geschwindigkeit v₀ des vorausfahrenden Fahrzeugs abzieht und eine Geschwindigkeitsdifferenz Δv ausgibt, und einem zweiten Differenzierglied 29, das die Geschwindigkeitsdifferenz Δv empfängt und den Abstand d zwischen dem Fahrzeug und dem davor fahrenden Fahrzeug ausgibt, gebildet.

Der Störbeobachter 11 empfängt die Stellgröße u und die Fahrzeugbeschleunigung a und rechnet daraus ein Fehlersignal â_{z}, das an einen Subtrahierer 8 geführt wird, der dieses Fehlersignal â_{z} von einer ebenfalls an den Subtrahierer 8 geführten Fahrzeugsollbeschleunigung aₛₒₗₗ abzieht und das resultierende Signal an das Regelelement 10 mit inversem statischem Fahrzeugmodell f⁻¹(·) führt, von welchem dann die Stellgröße u ausgegeben wird.

Die Sollbeschleunigung aₛₒₗₗ wird erhalten, indem einem von einem Geschwindigkeitsregler ausgegebenen Beschleunigungssignal a_{system} mittels eines Addierers 17 eine manuelle Zusatzbeschleunigung 18 überlagert wird. Der Geschwindigkeitsregler umfasst einen Addierer 21, der zu einer negativen Sollgeschwindigkeit vₛₒₗₗ, die von einem Abstandsregler ausgegeben wird, oder - in dem Fall, dass kein Abstandsregler, sondern lediglich ein Geschwindigkeitsregler (Tempomat) vorhanden ist - eine negative Wunschgeschwindigkeit V_{wunsch}, zu der von der Strecke (d.h., dem Fahrzeug) erzeugten Fahrzeuggeschwindigkeit v addiert und somit eine Differenzgeschwindigkeit Δvₛₒₗₗ ausgibt, die mittels eines Verstärkungsfaktors für den Geschwindigkeitsfehler kᵥ, d.h., mittels eines Proportionalglieds 20, und einem diesem nachgeschalteten Komfort- und Sicherheitsbegrenzer 33 für die Sollbeschleunigung, der die vom Proportionalglied 20 ausgegebene Sollbeschleunigung nach unten und oben begrenzt, in die Systembeschleunigung a_{system} gewandelt wird.

In dem Falle einer ACC-Reglerstruktur, d.h., in dem Fall, dass ein Abstandsregler vorgesehen wird, empfängt dieser einen Soll-Abstand dₛ, der mittels eines Subtrahierers 26 von dem Abstand d zu dem Vorderfahrzeug abgezogen wird, um einen (negativen) Abstandsfehler Δd zu erzeugen, der in einem Proportionalglied 25 mit einem Verstärkungsfaktor für den Abstandsfehler V_{d} beaufschlagt wird, um durch Addition der so erzeugten Differenzgeschwindigkeit zu der Geschwindigkeit v₀ des vorausfahrenden Fahrzeugs mittels eines Addierers 34 die Sollgeschwindigkeit Vₛₒₗₗ zu erzeugen, die an den Geschwindigkeitsregler angelegt wird. Bei einer so erzeugten Sollgeschwindigkeit vₛₒₗₗ ist innerhalb des Geschwindigkeitsreglers an dessen Eingang, also dem Addierer 21 vorgeschaltet, ein Wunschgeschwindigkeitsbegrenzer 32 vorgesehen, der die von dem Abstandsregler ausgegebene Sollgeschwindigkeit vₛₒₗₗ auf die vom Fahrer gesetzte maximale Wunschgeschwindigkeit begrenzt.

Anhand der in der Fig. 3 gezeigten möglichen Implementation einer manuellen Beschleunigungsbedienung in einer ACC- und/oder Geschwindigkeitsreglerstruktur kann erkannt werden, dass sich die manuelle Überlagerung einer Beschleunigung erfindungsgemäß zur Systembeschleunigung wie eine Störbeschleunigung im geschlossenen Regelkreis auswirkt. Um die Wirkung der manuellen Zusatzbeschleunigung nicht durch den Störgrößenbeobachter 11 zu kompensieren, ist zu beachten, dass die Einkopplung der manuellen Zusatzbeschleunigung nicht innerhalb der Störgrößenbeobachter-Rückführung erfolgt. Ebenso ist zu beachten, dass Geschwindigkeitsregler und gegebenenfalls Abstandsregler keine auf die jeweilig geregelte Differenz wirkenden Integralanteile besitzen, da diese ebenfalls die Wirkung der manuellen Zusatzbeschleunigung aufheben würden.

Das zuvor beschriebene Beschleunigungsbedienelement (BBE) kann zum Komfortgewinn auch auf eine Wirkung um DME und Bremsmanipulationen erweitert werden. Weiter ist auch eine Ausdehnung des Bedienelements auf das Gaspedal und die Bremse des Fahrzeugs möglich.

Mit der erfindungsgemäßen Anordnung einer Beschleunigungsbedienung lassen sich dann beispielsweise Fahrsituationen wie nahe Einscherer ohne Bremsbetätigung und damit ohne Deaktivierung des Assistenzsystems bewältigen.

Weitere über die erfindungsgemäße Einkopplung einer vom Fahrer des Kraftfahrzeugs vorgebbaren Zusatzbeschleunigung mögliche Funktionen sind:
- Anhalten mit dem Beschleunigungsbedienelement ohne Regelung auf ein vorausfahrendes Fahrzeug und Kombination mit Stillstandsmanagement,
- Anfahren mit Beschleunigungsbedienelement ohne Regelung auf ein vorausfahrendes Fahrzeug durch signifikantes Betätigen in Beschleunigungsrichtung,
- korrigiertes Anhalten mit Regelung auf ein vorausfahrendes Fahrzeug im Zusammenhang mit einer Stopp+Go-Funktion des ACC-Systems,
- kontrolliertes Aufschließen während des Anhaltevorgangs mit Regelung auf ein vorausfahrendes Fahrzeug im Zusammenhang mit der Stopp+Go-Funktion des ACC-Systems,
- Anfahr-Kommando mit Regelung auf ein vorausfahrendes Fahrzeug im Zusammenhang mit der Stopp+Go-Funktion des ACC-Systems durch signifikantes Betätigen in Beschleunigungsrichtung.

Eine erfindungsgemäße Beschleunigungsbedienung in der beispielhaft in Fig. 3 dargestellten Form ist nicht ausschließlich an das Vorhandensein eines Abstandsregelsystems wie ACC gebunden. Folgende Varianten sind möglich:
A) Die erfindungsgemäße Beschleunigungsbedienung kann - wie zuvor beschrieben - vollkommen konsistent auch in eine Fahrgeschwindigkeitsregelung mit vorwählbarer Wunschgeschwindigkeit (v_{wunsch}) integriert werden. Die Vorteile einer kurzzeitigen Fahrgeschwindigkeitsverringerung oder Fahrgeschwindigkeitserhöhung mittels eines Beschleunigungsbedienelements sind für den Fahrer genauso ersichtlich, wie im Falle einer ACC-Regelung.
B) Auch in Fahrgeschwindigkeitsregelungen ohne vorwählbare Wunschgeschwindigkeit kann die erfindungsgemäße Beschleunigungsbedienung vollkommen konsistent integriert werden: bei manueller Vorgabe einer positiven Beschleunigung durch das Beschleunigungsbedienelement beschleunigt das Fahrzeug entsprechend der Vorgabe, beim Loslassen des Beschleunigungsbedienelements (und einer damit verbundenen automatischen Rückstellung in eine Neutralposition) hält das Fahrzeug die momentane Geschwindigkeit, solange die Fahrgeschwindigkeitsregelung aktiv ist. Bei manueller Vorgabe einer negativen Beschleunigung durch das Beschleunigungsbedienelement verzögert das Fahrzeug entsprechend der Vorgabe, beim Loslassen des Beschleunigungsbedienelements (und einer damit verbundenen automatischen Rückstellung in eine Neutralstellung) hält das Fahrzeug die momentane Geschwindigkeit, solange die Fahrgeschwindigkeitsregelung aktiv ist. Kommt das Fahrzeug während einer manuellen Vorgabe einer negativen Beschleunigung durch das Beschleunigungsbedienelement zum Stillstand, so wird ein Stillstandsmanagment aktiv. Ein Anfahren bzw. Hochbeschleunigen des Fahrzeugs z.B. durch Betätigen des Beschleunigungsbedienelements in Richtung "Beschleunigen" kann ebenfalls konsistent implementiert werden.
   Diese Variante ist dann vergleichbar mit einer konventionellen Bedienung einer Fahrgeschwindigkeitsregelung, bei der z.B. durch dauerhaftes Drücken einer "+"-Taste eine Beschleunigung eingeleitet wird und durch dauerhaftes Drücken "-"-Taste eine Verzögerung eingeleitet wird. Der wesentliche Unterschied zu einer solchen konventionellen Bedienausiegung besteht jedoch in der Dosierbarkeit der jeweiligen Beschleunigung oder Verzögerung, dem möglichen Betriebsbereich über den gesamten Geschwindigkeitsbereich incl. des Stillstands und der beschriebenen Stillstands- und Anfahrfunktion.
C) Eine Beschleunigungsbedienung kann auch ohne Fahrgeschwindigkeitsregelung verwendet werden, z:B. als manuelle Beschleunigungs- oder Bremsbetätigung. Die Bremsbetätigung kann dabei bis hin zu einer Notbremse ausgelegt werden. Die Vorteile können in der wesentlich schnelleren Fahrzeugreaktion durch geringere Betätigungszeiten liegen, z.B. aufgrund der geringeren Masse eines Daumens zur Betätigung eines Beschleunigungsbedienelements gegenüber der relativ großen Masse eines Beins mit Schuhwerk zur Betätigung der Betriebsbremse. Dies kann besonders in Notbremssituationen einige wertvolle Meter Bremsweg einsparen, insbesondere, da das Beschleunigungsbedienelement so ausgelegt sein kann, einen "Anschlag" schneller zu erreichen, als das bei der Betriebsbremse, die dann "mit voller Kraft" getreten werden muss, der Fall ist.

### Bezugszeichenliste

- 1: Fahrer
- 2: System
- 3: Fahraufgabe
- 4: Addierer
- 5: Systembeschleunigung
- 6: vom Fahrer des Kraftfahrzeugs vorgebbare Zusatzbeschleunigung
- 7: resultierende Sollbeschleunigung
- 8: Subtrahierer
- 9: Stellgröße u auf das Fahrzeug
- 10: Regelelement mit inversem statischem Fahrzeugmodell f⁻¹(·)
- 11: Störbeobachter
- 12: Nachbildung des statischen Fahrzeugmodells f(·)
- 13: Addierer zur Nachbildung des Fahrzeugs als Regelstrecke
- 14: Störbeschleunigung a_{z}
- 15: Beschleunigung des Fahrzeugs a
- 16: Sollbeschleunigung aₛₒₗₗ für den Beschleunigungsregler
- 17: Addierer zur Überlagerung der Systembeschleunigung mit der Zusatzbeschleunigung
- 18: manuelle Zusatzbeschleunigung des Fahrers
- 19: vom Geschwindigkeitsregler ausgegebene Systembeschleunigung a_{system} 20 P-Regelelement des Geschwindigkeitsreglers
- 21: Addierer des Geschwindigkeitsreglers
- 22: erster Differenzierer zur Nachbildung des Fahrzeugs als Regelstrecke
- 23: Fahrzeuggeschwindigkeit v
- 24: vom Abstandsregler ausgegebene Sollgeschwindigkeit vₛₒₗₗ bzw. in eine Fahrgeschwindigkeitsregelung eingegebene Wunschgeschwindigkeit v_{wunsch}
- 25: P-Regelelement des Abstandsreglers
- 26: Subtrahierer des Abstandsreglers
- 27: Subtrahierer zur Nachbildung des Fahrzeugs als Regelstrecke
- 28: Geschwindigkeit des vorausfahrenden Fahrzeugs v₀
- 29: zweiter Differenzierer zur Nachbildung des Fahrzeugs als Regelstrecke
- 30: Abstand zum vorausfahrenden Fahrzeug d
- 31: Sollabstand zum vorausfahrenden Fahrzeug dₛ
- 32: Wunschgeschwindigkeitsbegrenzer
- 33: Komfort- und Sicherheitsbegrenzer
- 34: Addierer

## Patentansprüche

1. Fahrerassistenzsystem für ein Kraftfahrzeug, mit einem Regler zur Regelung der Beschleunigung (15) des Kraftfahrzeugs gemäß einer Sollbeschleunigung (16) und mit einem Einkoppelglied (17) zur Einkopplung einer vom Fahrer des Kraftfahrzeugs vorgebbaren Zusatzbeschleunigung (18), **dadurch gekennzeichnet, dass** die Zusatzbeschleunigung mittels eines manuellen Bedienelements (BBE) vorgebbar ist und dass aufgrund der vom Bedienelement (BBE) durch den Fahrer erzeugten Werte die vom System erzeugte Sollbeschleunigung so modifiziert wird, dass kontinuierlich die Wirkung des Systems abgeschwächt und die Wirkung der Fahrerbedienung verstärkt wird.

2. Fahrerassistenzsystem nach Anspruch 1, **dadurch gekennzeichnet, dass** das manuelle Bedienelement (BBE) ein Stellelement mit einer definierten Nullstellung und mit kontinuierlich abgreifbaren positiven und negativen Stellbereichen ist.

3. Fahrerassistenzsystem nach Anspruch 1 oder 2, **dadurch gekennzeichnet, dass** die Betätigung des Bedienelements (BBE) bei waagrechter Anordnung nach vorne zu einer Erhöhung der Systembeschleunigung und nach hinten zu einer Reduzierung der Systembeschleunigung führt.

## Claims

1. A driver assistance system for a motor vehicle, with a controller for controlling the acceleration (15) of the motor vehicle in accordance with a desired acceleration (16) and with an input coupling member (17) for inputting an additional acceleration (18) which can be predetermined by the driver of the motor vehicle, **characterised in that** the additional acceleration can be predetermined by means of a manual operating element (BBE) and **in that** on the basis of the values produced by the driver by means of the operating element (BBE), the desired acceleration produced by the system is modified in such a way that the effect of the system is continuously weakened and the effect of the driver operation is increased.

2. A diver assistance system according to claim 1, **characterised in that** the manual operating element (BBE) is an actuator with a defined zero position and with continuously tappable positive and negative actuating regions.

3. A driver assistance system according to claim 1 or 2, **characterised in that** the actuation of the operating element (BBE) with a horizontal arrangement to the front leads to an increase in the system acceleration and to the rear leads to a reduction in the system acceleration.

## Revendications

1. Système d'assistance au conducteur d'un véhicule automobile comportant un régulateur pour réguler l'accélération (15) du véhicule sur une accélération de consigne (16) et un organe de couplage (17) pour coupler une accélération complémentaire (18) prédéfinie par le conducteur du véhicule,
**caractérisé en ce que**
l'accélération complémentaire se prédéfinit à l'aide d'un élément de manoeuvre manuel (BBE), et
sur le fondement des valeurs générées par le conducteur à l'aide de l'élément de manoeuvre (BBE), l'accélération de consigne générée par le système est modifiée pour que l'effet du système soit atténué en continu et que l'effet de la manoeuvre du conducteur soit amplifié en continu.

2. Système d'assistance au conducteur d'un véhicule selon la revendication 1,
**caractérisé en ce que**
l'élément de manoeuvre manuel (BBE) est un élément d'actionnement comportant une position zéro, définie et des plages de réglage positives et négatives qui se détectent en continu.

3. Système d'assistance au conducteur d'un véhicule selon la revendication 1 ou 2,
**caractérisé en ce que**
pour une disposition horizontale, l'actionnement de l'élément de manoeuvre (BBE), vers l'avant, entraîne une augmentation de l'accélération du système et vers l'arrière, une réduction de l'accélération du système.
